# EUROPÄISCHE PATENTSCHRIFT

(11) **EP 2 638 385 B1**
(45) Veröffentlichungstag und Bekanntmachung des Hinweises auf die Patenterteilung: **03.03.2021**
(21) Anmeldenummer: 11781448.3
(22) Anmeldetag: 08.11.2011
(51) Int. Cl.: G01N 21/90, G01N 21/93

(54) **VERFAHREN ZUR FUNKTIONSKONTROLLE EINER INSPEKTIONSVORRICHTUNG UND VORRICHTUNG ZUR INSPEKTION EINES PRODUKTSTROMS**
METHOD FOR THE FUNCTIONAL CONTROL OF AN INSPECTION DEVICE AND DEVICE FOR INSPECTING A PRODUCT FLOW
PROCÉDÉ POUR LE CONTRÔLE DE FONCTION D'UN DISPOSITIF D'INSPECTION ET DISPOSITIF D'INSPECTION D'UN FLOT DE PRODUITS

(30) Priorität: 09.11.2010 DE 102010043632
(43) Veröffentlichungstag der Anmeldung: 18.09.2013
(73) Patentinhaber: Krones AG, 93073 Neutraubling (DE)
(72) Erfinder: LINDNER, Peter, 84085 Langquaid (DE)
(74) Vertreter: Grünecker Patent- und Rechtsanwälte PartG mbB
(86) Internationale Anmeldenummer: PCT/EP2011/005606
(87) Internationale Veröffentlichungsnummer: WO 2012/062449

(56) Entgegenhaltungen:
- EP-A1- 0 491 555
- EP-A2- 1 793 222
- WO-A1-94/28397
- WO-A2-02/054050
- WO-A2-2008/051576
- DE-A1- 2 166 235
- DE-A1- 3 245 908
- DE-A1- 3 330 817
- DE-A1- 19 646 678
- FR-A1- 2 907 553
- JP-A- H0 989 805

## Beschreibung

Die Erfindung betrifft ein Verfahren zur Funktionskontrolle einer Inspektionsvorrichtung für einen Behälterstrom nach dem Oberbegriff des Anspruchs 1 und eine Vorrichtung zur Inspektion eines Behälterstroms nach dem Oberbegriff des Anspruchs 12.

In Getränkeabfüllanlagen und vergleichbaren Produktionseinheiten werden Behälterströme in verschiedenen Produktionsstadien optisch überprüft. Beispielsweise werden die Seitenwand und der Boden der Behälter im Hellfeldverfahren bildgebend überprüft, der Mündungsbereich der Behälter im Dunkelfeldverfahren abgebildet. Dagegen erfolgt die Kontrolle auf das Vorhandensein von Restflüssigkeiten, wie beispielsweise Reinigungslaugen, üblicherweise nicht bildgebend mit Hilfe von Infrarotstrahlung oder Hochfrequenzstrahlung. Zur Funktionskontrolle der genannten Inspektionsvorrichtungen werden üblicherweise markierte Testbehälter durch die Vorrichtungen geschleust und überprüft, ob auf den Testbehältern vorhandene Testmarkierungen erkannt werden. Dieses Vorgehen, das beispielsweise in der DE 4 302 656 C1, der DE 19 646 694 A1 und der WO 2005/119224 A1 beschrieben ist, hat jedoch mehrere Nachteile:
Beispielsweise müssen die Testbehälter ständig in einem einwandfreien Zustand gehalten werden, da neben der Markierung der Testbehälter insbesondere die Testmarkierungen sicher erkannt werden sollen. Ist dies nicht der Fall, wird das Prüfergebnis verfälscht und/oder die Testprozedur nicht abgeschlossen. Außerdem besteht die Möglichkeit einer Manipulation, indem nach einem nicht erfolgreichen Testlauf Testmarkierungen gezielt verändert werden, um die Produktion fortsetzen zu können. Außerdem bedingt die Markierung der Testbehälter, dass der Bereich der Markierung von der Funktionskontrolle ausgenommen werden muss. Weitere grundsätzliche Nachteile sind das Sicherheitsrisiko für Bediener beim Einsetzen der Testbehälter, beispielsweise bei mit Laugen befüllten Behältern, sowie die notwenige Reduzierung der Maschinenleistung beim Einsetzen der Testbehälter. Ferner werden derartige Funktionskontrollen üblicherweise nur stündlich durchgeführt, so dass bei leistungsfähigen Anlagen eine Funktionskontrolle beispielsweise alle 60000 Behälter stattfindet. Somit bleibt das Risiko, dass zwischen den Funktionskontrollen eine große Anzahl produzierter Behälter nicht den geforderten Qualitätskriterien entspricht.

Ferner sind Verfahren und Vorrichtung gemäß Oberbegriff des Anspruchs 1 bzw. 12 aus der WO 02/054050 A2, DE19646678 A1 und DE3330817 A1 bekannt.

Es besteht somit der Bedarf für ein Verfahren zur Funktionskontrolle von Inspektionsvorrichtungen für Behälterströme sowie für entsprechend verbesserte Inspektionsvorrichtungen, um die oben genannten Nachteile zu vermeiden oder zumindest abzumildern.

Die gestellte Aufgabe wird gelöst mit einem Verfahren zur Funktionskontrolle einer Inspektionsvorrichtung nach Anspruch 1. Hierbei kann die charakteristische Teststrahlung selbst eine charakteristische Information enthalten, die anstelle einer Testmarkierung auf einem zu überprüfenden Behälter dafür geeignet ist, eine an dem Strahlungsdetektor erwartete Reaktion auf die charakteristische Teststrahlung zu überprüfen.

Die charakteristische Teststrahlung eignet sich zur Überprüfung der Inspektionsstrahlungsquelle, eines in der Inspektionsvorrichtung vorgesehenen Inspektionsstrahlengangs und/oder des Strahlungsdetektors. Ebenso lässt sich mit der charakteristischen Teststrahlung überprüfen, ob eine an der Inspektionsvorrichtung vorgesehene Auswerteeinheit und/oder Anzeigeeinheit ordnungemäß auf die Teststrahlung reagiert. Beispielsweise kann die charakteristische Teststrahlung zeitlich verändert werden, um einen Auswertesystemabsturz der Inspektionsvorrichtung und/oder ein Einfrieren eines angezeigten Bildschirminhalts zu erkennen. Die charakteristische Eigenschaft der Teststrahlung kann jede Information sein, die von systembedingten oder umweltbedingten Schwankungen während eines Normalbetriebs der Inspektionsvorrichtung, wie beispielsweise einem Signalrauschen, unterschieden werden kann. Hierbei ist es von Vorteil, wenn die charakteristische Eigenschaft der Teststrahlung eine zu detektierende Verschmutzung oder Beschädigung der Behälter simuliert. Die Sollanforderung kann beispielsweise ein bestimmter Parameterbereich sein, beispielsweise ein Intensitätsbereich der detektierten Teststrahlung, ein zeitlicher Verlauf eines von dem Strahlungsdetektor gelieferten Messsignals oder eine vorgegebene räumliche Verteilung der Messstrahlung im Bereich des Strahlungsdetektors.

Erfindungsgemäß wird die charakteristische Teststrahlung durch einen zu überprüfenden Inspektionsstrahlengang der Inspektionsvorrichtung geleitet. Dadurch lässt sich das Übertragungsverhalten des Inspektionsstrahlengangs überprüfen. Beispielsweise lässt sich feststellen, ob der Inspektionsstrahlengang in unzulässiger Weise mit einem Dampf oder einem Nebel beaufschlagt ist oder ein im Strahlengang befindliches Licht brechendes optisches Element, wie beispielsweise ein Schutzglas, verschmutzt oder beschädigt ist.

Ferner wird die charakteristische Teststrahlung bildgebend detektiert, und die charakteristische Sollanforderung ist das Vorhandensein eines charakteristischen Testmerkmals in einem mit Hilfe der Teststrahlung detektierten Bild. Dadurch können auch bildgebende Inspektionsverfahren zuverlässig überprüft werden.

Erfindungsgemäß weist das Strahlprofil der charakteristischen Teststrahlung charakteristische Hell-Dunkel-Übergänge in Form von Mustern auf. Dadurch können mit der bildgebenden Detektion besonders einfach und zuverlässig überprüfbare Fehlerkriterien erzeugt werden. Beispielsweise lassen sich linienförmige Gitter oder Raster mit großer Zuverlässigkeit von systembedingten Störkomponenten, wie Bildrauschen, unterscheiden und in ihrer Größe tatsächlich auftretenden Fehlerquellen anpassen. Beispielsweise könnte die Auflösung von Hell-Dunkel-Rastern an die benötigte Auflösung bei der Fehlererkennung angepasst werden. Beispielsweise könnte der Abstand zwischen benachbarten Hell-Dunkel-Übergängen der Größe zu detektierender Beschädigungen oder Verschmutzungen der zu überprüfenden Behälter entsprechen.

Vorzugsweise unterscheidet sich die charakteristische Teststrahlung bezüglich ihres Strahlprofils und/oder ihrer Bestrahlungsstärke von der Inspektionsstrahlung. Die Teststrahlung kann beispielsweise als Modulation der Inspektionsstrahlung verstanden werden, wobei die Inspektionsstrahlung und die Teststrahlung mit den zu überprüfenden Behältern und den Inspektionsstrahlengängen im Wesentlichen in gleicher Weise wechselwirken. Dadurch lässt sich eine Verschmutzung oder Beschädigung besonders zuverlässig detektieren. Anders gesagt ist es von Vorteil, wenn die Inspektionsstrahlung und die charakteristische Teststrahlung die gleiche Wellenlänge haben, den gleichen Wellenlängenbereich abdecken oder sich die Wellenlängenbereiche der beiden Strahlungen zumindest überlappen.

Bei einer bevorzugten Ausgestaltung ist die charakteristische Teststrahlung schwächer als die Inspektionsstrahlung. Dadurch lässt sich auf einfache Weise eine Situation simulieren, bei der die Inspektionsstrahlung durch Wassertropfen, einen Nebel, Dampf oder eine andere Verschmutzung des Inspektionsstrahlengangs abgeschwächt wird, so dass eine zuverlässige Detektion von fehlerhaften Behältern nicht möglich ist. Außerdem lässt sich auf einfache Weise kontrollieren, ob die Inspektionsvorrichtung auf Signalveränderungen im Allgemeinen reagiert. Bei einer bevorzugten Ausgestaltung detektiert der Strahlungsdetektor die charakteristische Teststrahlung bei laufendem Behälterstrom, wenn sich im Inspektionsstrahlengang kein Behälter befindet. Insbesondere Inspektionsvorrichtungen mit einer Hellfeldbeleuchtung lassen sich dadurch ohne Testbehälter überprüfen. Somit wird weder ein Testbehälter benötigt, an dem eine Testmarkierung angebracht ist, noch ein Testbehälter, an dem eine Testmarkierung durch Projektion und Reflektion oder Transmission eines Testmusters temporär erzeugt wird. Somit kann die Funktionskontrolle jeweils zwischen zwei Behältern des Produktionsstroms durchgeführt werden. Es müssen folglich keine Behälter als Testbehälter markiert und aus dem Produktionsstrom ausgesondert werden. Dadurch lässt sich die Funktionskontrolle mit besonders großer Zuverlässigkeit und bei besonders geringfügiger Beeinflussung des Produktionsvorgangs durchführen.

Bei einer weiteren bevorzugten Ausgestaltung wird die charakteristische Teststrahlung auf einen im Inspektionsstrahlengang befindlichen Behälter gerichtet. Dadurch lässt sich auch bei einer Dunkelfeldbeleuchtung auf dem zu inspizierenden Behälter eine temporäre Markierung erzeugen, beispielsweise in Form eines charakteristischen Signals oder eines charakteristischen Testmusters, um einen fehlerhaften Behälter zu simulieren. Somit kann der Behälterstrom auch während der Funktionskontrolle in einem normalen Produktionsbetrieb weiterlaufen. Insbesondere ist das Einsetzen spezieller Testprodukte in den Produktionsstrom entbehrlich.

Vorzugsweise wird der mit der charakteristischen Teststrahlung bestrahlte Behälter dann als Testobjekt gekennzeichnet. Da mit der Teststrahlung ein Fehler simuliert wird, führt eine ordnungsgemäße Funktionskontrolle mit der Teststrahlung zu einem Ausschleusen des mit der Teststrahlung bestrahlten Behälters. Die Kennzeichnung des mit der Teststrahlung bestrahlten Behälters ermöglicht eine Identifikation des Behälters als Testobjekt, mit dem Ziel einer eindeutigen Zuordnung ausgeschleuster Behälter.

Vorzugsweise wird der als Testobjekt gekennzeichnete Behälter für mindestens eine weitere Inspektion des Behälterstroms als Testobjekt verwendet. Dadurch kann die Anzahl der für die Funktionskontrolle benötigten Testobjekte insgesamt reduziert werden mit dem Ziel einer Kostenreduzierung für die Funktionskontrolle.

Vorzugsweise ist das Testmerkmal ein Bildkontrast, der charakteristisch ist für eine Beschädigung oder Verschmutzung des Behälters oder eine Fehlfunktion der Inspektionsvorrichtung. Dadurch können verschiedene Fehlerquellen bei der bildgebenden Detektion auf einfache Weise simuliert werden. Es lässt sich somit ein besonders praxisnaher Funktionstest durchführen.

Bei einer günstigen Ausgestaltung wird die Lage der Hell-Dunkel-Übergänge im Strahlprofil der charakteristischen Teststrahlung verändert und mindestens ein Testbild vor der Veränderung und ein Testbild nach der Veränderung aufgenommen. Ferner werden die Testbilder miteinander verglichen. Dadurch lassen sich insbesondere Inspektionsvorrichtungen überprüfen, bei denen bewegte Strukturen erkannt werden müssen, beispielsweise bei der Fremdkörpererkennung in befüllten Flaschen. Ebenso wäre es möglich, nur einen Teil der Hell-Dunkel-Übergänge im Strahlprofil zu verändern und andere Bereiche der Hell-Dunkel-Übergänge konstant zu lassen. Damit lässt sich eine Situation simulieren, wie sie ebenfalls bei der Fremdkörpererkennung in befüllten Flaschen vorliegt. Hier sind die sich in der Flasche bewegenden Fremdkörper gegenüber einer stationären Riffelung des Flaschenbodens oder dergleichen zu unterscheiden. Der Vergleich der Testbilder ermöglicht zumindest zwei Momentaufnahmen, die sich bei einer korrekten Funktion der Inspektionsvorrichtung in zumindest einem charakteristischen Merkmal unterscheiden müssen.

Vorzugsweise werden bei einem Verfehlen der charakteristischen Sollanforderung ein Produktionsstopp und/oder ein Reinigungsprozess ausgelöst. Dies ermöglicht eine Automatisierung der Inspektion und der Funktionskontrolle, so dass die Wahrscheinlichkeit für eine fehlerhafte Produktion und die Dauer von Produktionsunterbrechungen aufgrund eines Produktionsstopps oder Reinigungsprozesses minimiert wird.

Bei einer besonders günstigen Ausgestaltung wird ferner verifiziert, ob der Behälter in Folge der Funktionskontrolle aus dem Behälterstrom ausgeleitet wurde. Dadurch kann die Verlässlichkeit der Funktionskontrolle zusätzlich erhöht werden.

Die gestellte Aufgabe wird ferner gelöst mit einer Vorrichtung zur Inspektion eines Behälterstroms nach Anspruch 12. Demnach umfasst die erfindungsgemäße Vorrichtung eine Funktionstesteinrichtung zum Bereitstellen einer mit dem Strahlungsdetektor zu detektierenden charakteristischen Teststrahlung und zur Überprüfung, ob die detektierte Teststrahlung eine für eine ordnungsgemäße Funktion der Inspektionsvorrichtung charakteristische Sollanforderung erfüllt.

Ferner ist der Strahlungsdetektor eine Kamera, und die Funktionstesteinrichtung umfasst eine Bildauswerteeinheit, die geeignet ist, das Vorhandensein eines Testmerkmals einem mit der Teststrahlung belichteten Ausgabebild der Kamera zu überprüfen. Eine derartige Konfiguration eignet sich zur Funktionskontrolle sämtlicher bildgebender Inspektionsvorrichtungen für Behälterströme, wobei insbesondere die Verwendung von Testprodukten mit permanent aufgebrachten Testmerkmalen entbehrlich ist.

Erfindungsgemäß umfasst die Funktionstesteinrichtung eine Projektionsvorrichtung zum Projizieren eines Hell-Dunkel-Musters auf einem einen Inspektionsstrahlengang beleuchtungsseitig vorgesehene Streuscheibe oder Blende. Dadurch lässt sich insbesondere bei einer bildgebenden Detektion mit Hilfe einer zusätzlichen Strahlungsquelle, die beispielsweise auch nachrüstbar sein könnte, eine charakteristische Information bereitstellen, um eine Verschmutzung von Behältern oder eine Beschädigung der Inspektionsvorrichtung zu simulieren.

Vorzugsweise umfasst die Funktionstesteinrichtung ein rasterförmiges Beleuchtungsfeld zum Erzeugen eines Hell-Dunkel-Beleuchtungsmusters, wobei das Beleuchtungsfeld insbesondere ein Bestandteil der Inspektionsstrahlungsquelle ist. Derartige Beleuchtungsfelder, wie beispielsweise Leuchtdiodenfelder, oder Bildschirme erlauben eine besonders flexible Erzeugung von Testmustern in Form von Hell-Dunkel-Übergängen. Beispielsweise könnten in einem Inspektionszyklus mehrere unterschiedliche Muster erzeugt werden, um unterschiedliche Kriterien oder Bildbereiche zu überprüfen.

Vorzugsweise umfasst die Funktionstesteinrichtung eine verstellbare Abschwächeinrichtung zum Abschwächen oder Blockieren der Inspektionsstrahlung, um einen Anteil der Inspektionsstrahlung als Teststrahlung bereitzustellen. Die Abschwächeinrichtung könnte beispielsweise in mechanischer Shutter sein, ein Filter, ein elektronischer Shutter, wie beispielsweise ein LCD-Feld, oder eine Steuereinrichtung zum Verändern der Helligkeit und/oder der Einschalt- und Ausschaltzeit und/oder Stromregelung der Inspektionsstrahlungsquelle. Dadurch lässt sich die Funktion der Inspektionsvorrichtung auf besonders einfache Weise kontrollieren, beispielsweise bei der nicht bildgebenden Kontrolle zur Bestimmung einer Restflüssigkeit in einem Behälter. Geprüft werden könnte ebenfalls die zeitliche Sprungantwort. Das heißt, wenn die Strahlungsquelle beispielsweise 100 µs aktiviert wurde, soll die Antwort des Aufnehmers in einem vorgegebenen Zeitbereich stattfinden.

Bei einer besonders günstigen Ausgestaltung ist die Vorrichtung vom Rundläufertyp, die mehrere umlaufende Inspektionsstationen zur Inspektion je eines Behälters mit einem jeweils zugeordneten Strahlungsdetektor umfasst. Bei derartigen Inspektionsvorrichtungen ist das bisher übliche Bereitstellen von speziellen Testobjekten besonders aufwändig, da alle Inspektionsstationen für die Funktionskontrolle mit derartigen Testobjekten bestückt werden müssen. Somit ist die erfindungsgemäße Problemlösung, bei der derartige Testobjekte entbehrlich sind, dann besonders vorteilhaft.

Vorzugsweise ist die Vorrichtung eingerichtet, um vor jeder Inspektion eines Behälters eine Funktionskontrolle mit Hilfe des für die anstehende Inspektion vorgesehenen Strahlungsdetektors durchzuführen. Damit lässt sich eine besonders hohe Zuverlässigkeit der Funktionskontrolle und der Qualitätskontrolle erreichen.

Vorzugsweise umfasst die erfindungsgemäße Vorrichtung eine Strahlungsquelle, die derart ausgebildet ist, dass mit ihr sowohl die Inspektionsstrahlung als auch die Teststrahlung erzeugt werden kann. Dadurch lässt sich eine besonders kompakte und flexible Inspektionsvorrichtung bereit stellen. Außerdem lässt sich der Inspektionsstrahlengang besonders zuverlässig überprüfen.

Eine besonders vorteilhafte Ausführungsform der erfindungsgemäßen Vorrichtung umfasst ferner eine Ausleitvorrichtung zum Ausleiten fehlerhafter Behälter und eine Kontrollvorrichtung zum Überprüfen, ob ein Behälter in Folge der Funktionskontrolle von der Ausleitvorrichtung ausgeleitet wurde. Dadurch lässt sich die Zuverlässigkeit der Funktionskontrolle steigern. Die Ausleitvorrichtung und die Kontrollvorrichtung lassen sich insbesondere in ein übergeordnetes Anforderungs- und Verifizierungssystem für die Funktionskontrolle einbinden, mit dem einzelne Funktionskontrollen beispielsweise ereignisbedingt oder im Rahmen von Routineabläufen eingeleitet werden können, und das Rückmeldungen über das erfolgreiche Ausleiten von Produkten aufgrund der Funktionskontrolle verwaltet und auswertet.

Bevorzugte Ausführungsformen der Erfindung sind in der Zeichnung dargestellt. Es zeigen:
- Fig. 1A: eine schematische Draufsicht auf eine erste Ausführungsform der erfindungsgemäßen Inspektionsvorrichtung mit seitlicher Durchlichtbeleuchtung;
- Fig. 1B: einen Querschnitt durch die Inspektionsvorrichtung der Fig. 1A;
- Fig. 2A: eine schematische seitliche Teilansicht einer zweiten Ausführungsform der erfindungsgemäßen Inspektionsvorrichtung mit Durchlichtbeleuchtung von unten;
- Fig. 2B: ein schematisch dargestelltes Inspektionskamerabild eines zu inspizierenden Behälterbodens, aufgenommen mit der Vorrichtung aus Fig. 2A;
- Fig. 2C: ein schematisch dargestelltes Testkamerabild einer gerasterten Beleuchtungseinrichtung mit Testmerkmalen zur Überprüfung der Inspektionsvorrichtung aus Fig. 2A;
- Fig. 2D: eine schematische Draufsicht auf die zweite Ausführungsform der erfindungsgemäßen Inspektionsvorrichtung mit mehreren umlaufenden Inspektionsstationen;
- Fig. 3A: eine schematische Seitenansicht einer dritten Ausführungsform der erfindungsgemäßen Dunkelfeld-Inspektionsvorrichtung mit einem schematisierten Inspektionskamerabild;
- Fig. 3B: eine schematische Seitenansicht der dritten Ausführungsform mit einem schematisierten Testkamerabild; und
- Fig. 4: ein Schema eines zentralen Kontrollsystems zum Anfordern und Verifizieren der erfindungsgemäßen Funktionskontrolle.

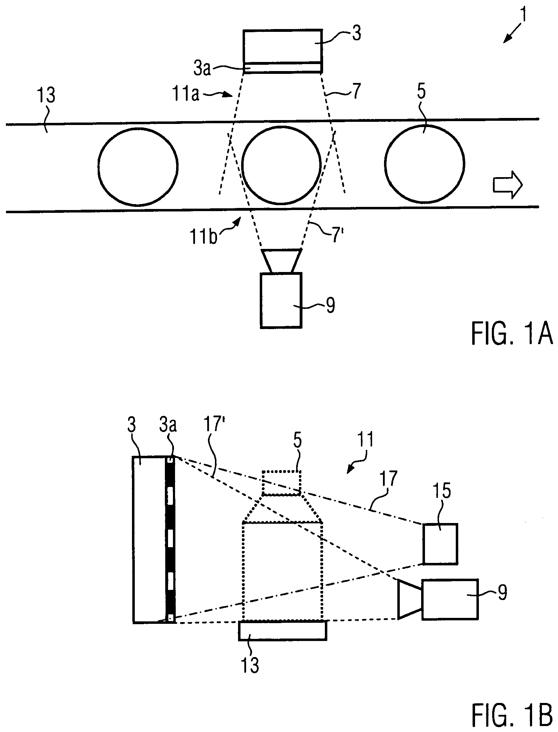

Wie Fig. 1 erkennen lässt, umfasst eine erste Ausführungsform 1 der erfindungsgemäßen Inspektionsvorrichtung zur Überprüfung eines Produktstroms, insbesondere eines Behälterstroms, eine Inspektionsstrahlungsquelle 3 zum Beleuchten von Behältern 5 und dergleichen im Durchlicht mit einer Inspektionsstrahlung 7 und einen Strahlungsdetektor 9 zum Messen der Inspektionsstrahlung 7' nach Wechselwirkung mit dem Behälter 5. Zwischen der Inspektionsstrahlungsquelle 3 und dem Strahlungsdetektor 9 ist ein Inspektionsstrahlengang 11 ausgebildet, umfassend einen beleuchtungsseitigen Abschnitt 11a und einen detektionsseitigen Abschnitt 11b. In Fig. 1A der Vollständigkeit halber angedeutet ist ein Transportmittel 13, um die Behälter 5 als kontinuierlichen Produktstrom durch die Inspektionsvorrichtung 1 zu führen. Die Inspektionsstrahlung 7 ist beispielsweise Licht, kann aber für bestimmte Anwendungen auch eine elektromagnetische Hochfrequenzstrahlung sein. Nachfolgend wird die Inspektionsstrahlungsquelle 3 je nach beschriebener Anwendung auch als Beleuchtungseinrichtung bezeichnet.

In Fig. 1B ist ferner eine Testbeleuchtungseinrichtung 15 angedeutet, die eine Teststrahlung 17 auf eine an der Beleuchtungseinrichtung 3 vorgesehene Streuscheibe 3a richtet. Der Strahlungsdetektor 9 ist so angeordnet, dass er einen von der Streuscheibe 3a reflektierten Anteil 17' der Teststrahlung 17 detektieren kann, wenn sich im Inspektionsstrahlengang 11 kein Behälter 5 befindet. In der Fig. 1B ist der Behälter 5 daher lediglich gestrichelt angedeutet. Die Strahlengänge der vorgenannten Strahlungen 7, 7', 17 und 17' sind hierbei lediglich schematisch angedeutet, ohne die Erfindung auf bestimmte Abbildungsvarianten, Öffnungswinkel oder dergleichen zu beschränken.

Die Testbeleuchtungseinrichtung 15 ist so ausgebildet, dass sie auf die Streuscheibe 3a eine Teststrahlung 7 mit charakteristischen Hell-Dunkel-Verläufen projizieren kann. Geeignete Hell-Dunkel-Verläufe sind z. B. Streifenmuster, Hell-Dunkel-Raster, geometrische Figuren, wie Kreise oder Vielecke, Punktmuster und dergleichen. Vorteilhaft sind Hell-Dunkel-Verläufe, bei denen der Abstand zwischen hellen und dunklen Bereichen einer erwünschten Auflösung bei der Erkennung von Beschädigungen oder Verschmutzungen an den zu inspizierenden Behältern 5 entspricht.

Der Strahlungsdetektor 9 ist vorzugsweise eine Kamera, wie beispielsweise eine CCD-Kamera. Die Schärfentiefe der Kamera wird dann vorzugsweise derart gewählt, dass eine zu inspizierende Behälteroberfläche gleichermaßen scharf abgebildet wird wie die Streuscheibe 3a mit einem auf diese projizierten Testmuster. Wie nachfolgend noch ausführlicher beschrieben wird, wäre allerdings auch ein nicht bildgebender Strahlungsdetektor 9 prinzipiell denkbar.

Die Behälter 5 sind vorzugsweise transparente Flaschen oder dergleichen. Die Inspektionsstrahlung 7 ist beispielsweise sichtbares oder infrarotes Licht. Die Beleuchtungseinrichtung 3 ist beispielsweise eine Lichtbogenlampe, ein Laser, eine Leuchtdiode oder ein Leuchtdiodenfeld, ein LED-, LCD- oder OLED-Monitor oder dergleichen mit oder ohne eine Streuscheibe, um eine flächige, gleichmäßig ausgeleuchtete Lichtquelle für die Inspektion bereit zu stellen.

Die Testbeleuchtungseinrichtung 15 emittiert vorzugsweise im gleichen Spektralbereich wie die Inspektionsbeleuchtungseinrichtung 3. Es wäre aber auch denkbar, dass sich die Spektralbereiche der Inspektionsbeleuchtungseinrichtung 3 und der Testbeleuchtungseinrichtung 15 lediglich in einem für die Inspektion der Behälter 5 relevanten Spektralbereich überlappen. Es ist generell wünschenswert, dass die Inspektionsstrahlung 7, 7' und die Teststrahlung 17, 17' mit möglichen Störungsquellen im Strahlengang 11, wie beispielsweise Wassertropfen, Dämpfen und Nebeln, dieselben Wechselwirkungen eingehen. Dadurch ist gewährleistet, dass eine Abschwächung der Teststrahlung 17, 17' durch Nebel oder Dämpfe einer Situation bei der Inspektion der Behälter 5 nahe kommt.

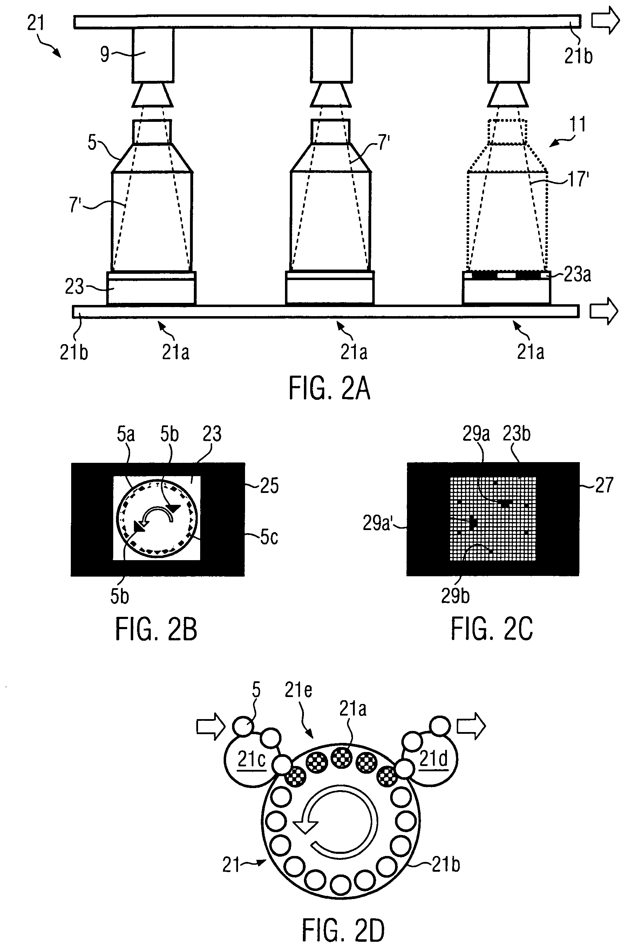

Ein Vorteil der Durchlichtanordnung der ersten Ausführungsform 1 liegt darin, dass die Übertragungseigenschaften des Inspektionsstrahlengangs 11 für die Inspektionsstrahlung 7, 7' im Hellfeld auch ohne die Anwesenheit eines Testbehälters im Inspektionsstrahlengang 11 überprüft werden können. Dies wird insbesondere dadurch ermöglicht, dass mit Hilfe der Streuscheibe 3a oder mit einem anderen rückstreuenden und/oder reflektierenden optischen Element im Inspektionsstrahlengang 11 eine Teststrahlung 17' mit einer charakteristischen Eigenschaft erzeugt wird, die bei einer ordnungsgemäßen Funktion der Inspektionsvorrichtung 1 eine charakteristische Reaktion des Strahlungsdetektors 9 verursacht. Für die Bild gebende Inspektion von Behältern sind Testmuster in Form von Hell-Dunkel-Übergängen im Strahlprofil der Teststrahlung 17' als charakteristische Eigenschaft besonders gut geeignet, da sich auf diese Weise verschiedene Messaufgaben der Behälterinspektion flexibel simulieren lassen. Das Vorliegen der jeweiligen charakteristischen Reaktion des Strahlungsdetektors 9 stellt somit eine Sollanforderung zur Bestätigung der einwandfreien Funktion der Inspektionsvorrichtung 1 dar. Das Prinzip des Detektierens einer charakteristischen Teststrahlung 17, 17' wird beispielsweise anhand der Fig. 2A und 2B noch ausführlicher erläutert.

Fig. 2A zeigt eine zweite Ausführungsform 21 der erfindungsgemäßen Inspektionsvorrichtung zur Überprüfung von Behältern 5. Die Inspektionsvorrichtung 21 umfasst mehrere identische Inspektionsstationen 21a, die sich während der Inspektion gemeinsam mit den zu inspizierenden Behältern 5 bewegen. Beispielsweise können die Inspektionsstationen 21a kontinuierlich an einem Rahmen 21b umlaufen, wie in der Fig. 3C für eine Inspektionsvorrichtung 21 vom Rundläufertyp angedeutet.

An jeder Inspektionsstation 21a ist eine Beleuchtungsvorrichtung 23 und ein Strahlungsdetektor 9, vorzugsweise eine Kamera, zur Messung der Inspektionsstrahlung 7' vorgesehen. Im Beispiel der Fig. 2A beleuchtet die Beleuchtungseinrichtung 23 einen zu inspizierenden Behälter 5 von unten im Durchlicht, so dass der Boden 5a des Behälters 5 von einer über dem Behälter 5 angeordneten Kamera 9 bildgebend detektiert werden kann.

Bei der Inspektionsvorrichtung 21 der Fig. 2A handelt es sich beispielsweise um eine Vorrichtung zur Erkennung von Fremdkörpern 5b in gefüllten Behältern 5. In diesem Fall werden die Behälter 5 vor der Bild gebenden Inspektion in einem stromaufwärts vorgesehen Abschnitt der Inspektionsvorrichtung 21 in Drehung versetzt und kurz vor der Inspektion wieder abgebremst, so dass sich der Behälterinhalt mit gegebenenfalls vorhandenen Fremdkörpern 5b gegenüber dem relativ zur Kamera 9 ruhenden Behälter 5 bewegt.

In Fig. 2B ist ein Inspektionskamerabild 25 angedeutet mit der Abbildung eines Behälterbodens 5a mit einer stationären Riffelung 5c über der Beleuchtungseinrichtung 23 und einem sich relativ dazu bewegenden Fremdkörper 5c. Die Detektion von Fremdkörpern 5b erfolgt üblicherweise durch Vergleich mehrerer nacheinander aufgenommener Inspektionskamerabilder 25 desselben Behälters 5, wobei sich Unterschiede zwischen den einzelnen Inspektionskamerabildern dann nur durch die sich bewegenden Fremdkörper 5b ergeben.

Fig. 2C zeigt ein entsprechendes Testkamerabild 27 der Kamera 9 für die Funktionskontrolle der Inspektionsvorrichtung 21, wobei sich im Inspektionsstrahlengang 11 kein Behälter 5 befindet. Die Beleuchtungseinrichtung 23 ist im Beispiel aus Fig. 2A als rasterförmige Lichtquelle, wie beispielsweise als Leuchtdiodenfeld mit einer Streuscheibe 23a ausgebildet oder als Anzeigebildschirm, der auf Grund seiner großen Anzahl von Bildpunkten die Streuscheibe 23a entbehrlich macht. In Analogie zur ersten Ausführungsform ist die Teststrahlung nach Durchdringen der Streuscheibe 23a mit 17' bezeichnet. Allerdings ist eine separate Testbeleuchtungseinrichtung bei der zweiten Ausführungsform 21 entbehrlich, da die Beleuchtungseinrichtung 23 sowohl die Inspektionsstrahlung 7 als auch die Teststrahlung 17, 17' erzeugen kann. Die Erfindung ist jedoch nicht an bestimmte Verfahren zur Erzeugung, Projektion oder Streuung der ursprünglich erzeugten Teststrahlung 17 gebunden.

Die einzelnen Leuchtpunkte 23b der Beleuchtungseinrichtung 23 können selektiv an- und ausgeschaltet werden. Dadurch ist es möglich, die Beleuchtungseinrichtung 23 alternativ als Inspektionsbeleuchtungseinrichtung und als Testbeleuchtungseinrichtung zu verwenden. Zu diesem Zweck werden die einzelne Beleuchtungspunkte 23b der Beleuchtungseinrichtung 23 eingeschaltet oder ausgeschaltet, um charakteristische Merkmale 29a, 29b in Form von Hell-Dunkel-Unterschieden im Testbild 27 der Kamera 9 zu erzeugen. Im Beispiel der Fig. 2C sind diese charakteristischen Merkmale 29a, 29b als relative Helligkeitsminima durch dunkle Rasterpunkte angedeutet. Die charakteristischen Merkmale 29a, 29b könnten aber genauso gut Bereiche mit relativen Helligkeitsmaxima sein. Zweckmäßigerweise werden einzelne Bildpunkte 23b der Beleuchtungseinrichtung 23 so ein- oder ausgeschaltet, dass die charakteristischen Merkmale 29a, 29b in ihrer Größe und/oder Verteilung im Testkamerabild 27 zu detektierenden Fremdkörpern 5b im Inspektionsbild 25 zumindest näherungsweise entsprechen. Hierbei sind je nach Anzahl der Leuchtpunkte 23b der Beleuchtungseinrichtung 23 beliebig geformte und angeordnete Testmerkmale 29a, 29b im Testbild 27 denkbar.

Um sich bewegende Fremdkörper 5b zu simulieren, ist es beispielsweise möglich, in der Teststrahlung 17, 17' nacheinander wenigstens zwei unterschiedliche Hell-Dunkel-Testmuster für die Funktionskontrolle je einer Inspektionsstation 21a zu erzeugen und die den Testmustern jeweils zugeordneten Testkamerabilder 27 miteinander zu vergleichen. Hierbei wäre es denkbar, einzelne charakteristische Testmerkmale 29a in ihrer Position zu verändern, während andere charakteristische Testmerkmale 29b unverändert bleiben und somit stationäre Strukturen des Testobjekts simulieren könnten, beispielsweise eine Riffelung 5c eines Behälterbodens 5a. Dies ist in der Fig. 2C anhand des charakteristischen Merkmals 29a in einer ersten Position und eines entsprechenden charakteristischen Merkmals 29a' in einer zweiten Position der Einfachheit halber in einem einzigen Testkamerabild 27 zusammengefasst. In der Praxis würde das erste Merkmal 29a für die Aufnahme eines ersten Testkamerabilds 27 erzeugt und das zweite Merkmal 29a' für die Aufnahme eines zweiten Testkamerabilds 27'. Selbstverständlich wäre es möglich, eine beliebige Anzahl von charakteristischen Merkmalen 29a, 29b in ihrer Position zu verändern oder gleich zu lassen, um bestimmte Strukturen am Boden des Behälters 5 zu simulieren. Auch wäre es möglich, mehr als zwei Testbilder 27, 27' miteinander zu vergleichen, um die Inspektionsvorrichtung 21 bezüglich der charakteristischen Sollanforderung zu überprüfen.

Für die Funktionskontrolle eignet sich im Wesentlichen die Zeitspanne zwischen zwei aufeinanderfolgenden Behälterinspektionen derselben Inspektionsstation 21a, also zwischen dem Bestücken der jeweiligen Inspektionsstation 21a und der Entnahme des überprüften Behälters 5. Diese Zeitspanne könnte für eine beliebige Anzahl von Testkamerabildern 27, 27' genutzt werden, solange die Aufnahme, Speicherung und/oder Auswertung der Testkamerabilder 27, 27' vor dem Einsetzen des nächsten zu überprüfenden Behälters 5 in die jeweilige Inspektionsstation 21a erfolgt. Dies wird an Hand der Fig. 2D deutlich, die eine erfindungsgemäße Inspektionsvorrichtung 21 vom Rundläufertyp mit einem Einlaufbereich 21c für die zu überprüfenden Behälter 5 und einem Auslaufbereich 21d für die überprüften Behälter 5 zeigt. Die Funktionskontrolle der Inspektionsstationen 21a kann somit ohne Einschränkung der Maschinenleistung jeweils in einem Bereich 21e nach dem Durchlaufen des Auslaufbereichs 21d und vor dem Erreichen des Einlaufbereichs 21c erfolgen. Gerade bei mitlaufenden Inspektionsstationen 21a, die für die Funktionskontrolle ansonsten gleichzeitig mit speziellen Testkörpern bestückt werden müssten, ist die beschriebene Funktionskontrolle an Hand einer Teststrahlung mit mindestens einem charakteristischen Merkmal 29a, 29b von besonderem Vorteil. Als charakteristische Eigenschaft der Teststrahlung 17, 17' kommen ebenso definierte Abstufungen der Teststrahlleistung oder charakteristische Strahlungspulse in Frage, auch bei einer nicht Bild gebenden Detektion.

Bei der ersten und zweiten Ausführungsform der erfindungsgemäßen Inspektionsvorrichtung werden die zu inspizierenden Behälter 5 im Hellfeld inspiziert. Folglich liegt ein Vorteil der beschriebenen Funktionskontrolle gerade darin, dass für die Funktionskontrolle im Inspektionsstrahlengang 11 kein Behälter 5 benötigt wird. Somit kann die Funktionskontrolle des Inspektionsstrahlengangs 11 jeweils zwischen zwei aufeinanderfolgenden Inspektionen durchgeführt werden, solange kein Behälter 5 im Strahlengang 11 ist. Dadurch ist eine im Idealfall lückenlose Funktionskontrolle der Inspektionsvorrichtung 1, 21 möglich. Eine Steuereinheit (nicht dargestellt) könnte zu diesem Zweck zwischen einem Inspektionsprogramm und einem Programm zur Funktionskontrolle kontinuierlich wechseln. Kameras 9 könnten in Vergleich zur herkömmlichen Behälterinspektion mit der doppelten Bildaufnahmefrequenz betrieben werden.

Die erfindungsgemäße Funktionskontrolle eignet sich für verschiedene Hellfeldinspektionsverfahren, wie beispielsweise die Bodenkontrolle von Behältern 5, die Innenwandkontrolle der Behälter 5, die Seitenwandkontrolle der Behälter 5, die Erkennung von Fremdkörpern 5b und die Erkennung unerwünschter Restflüssigkeit in den Behältern 5. Dies könnte beispielsweise eine Reinigungslauge oder ein Öl sein.

Die Erkennung von Restflüssigkeit erfolgt üblicherweise nicht Bild gebend, insbesondere mit Hilfe infraroter oder hochfrequenter elektromagnetischer Strahlung. Da die Erkennung von Restflüssigkeit in der Regel durch eine Abschwächung der Inspektionsstrahlung 7 beim Durchdringen des Behälters 5 festgestellt wird, eignet sich für die Funktionskontrolle einer derartigen Restflüssigkeitserkennung insbesondere eine charakteristische Teststrahlung 17 mit einer im Vergleich zur Inspektionsstrahlung 7 um ein bekanntes Maß reduzierten Bestrahlungsstärke, beispielsweise um 50 bis 90%. Beispielsweise könnte die Bestrahlungsstärke der Teststrahlung 17 zumindest näherungsweise der Bestrahlungsstärke entsprechen, die beim Vorhandensein von Restflüssigkeit in einem zu überprüfenden Behälter 5 zu erwarten ist. Dadurch lässt sich auf einfache Weise überprüfen, ob der Strahlungsdetektor 9 in dem für die Behälterinspektion relevanten Messbereich angemessen reagiert. Es wäre aber auch möglich, eine Teststrahlung 17 mit im Vergleich zur Inspektionsstrahlung 7 erhöhten Bestrahlungsstärke bereitzustellen.

Die erfindungsgemäße Funktionskontrolle erleichtert in erster Linie die Überprüfung der Inspektionsstrahlengänge 11. Allerdings kann ebenso die korrekte Funktion des Strahlungsdetektors 9 und der zugehörigen Auswerteeinheiten und Anzeigeinstrumente überprüft werden. Beispielsweise ließen sich aufeinander folgende Funktionskontrollen mit voneinander abweichenden charakteristischen Teststrahlungen 7 durchführen. Als charakteristische Sollanforderung wären dann jeweils voneinander abweichende Messsignale des Strahlungsdetektors 9 denkbar. Bei einem Verfehlen einer derartigen Sollanforderung könnte man beispielsweise auf einen Auswertesystemabsturz oder ein fehlerhaftes Einfrieren einer Bildschirmanzeige schließen.

Gerade bei der Erkennung von Restflüssigkeiten ist eine Funktionskontrolle der Inspektionsvorrichtung 1, 21 ohne zusätzlichen Testkörper von besonders großem Vorteil. Es entfällt der für das Bedienungspersonal potenziell gefährliche Umgang mit Gefahrenstoffen wie Testlaugen. Außerdem entfällt die Notwendigkeit, Testbehälter oder vergleichbare Testkörper mit verlässlich gleichbleibenden Eigenschaften bereitzustellen. Zudem werden die Möglichkeiten einer Manipulation der Funktionskontrolle, insbesondere durch eine Veränderung der Testkörper, reduziert oder ausgeschlossen.

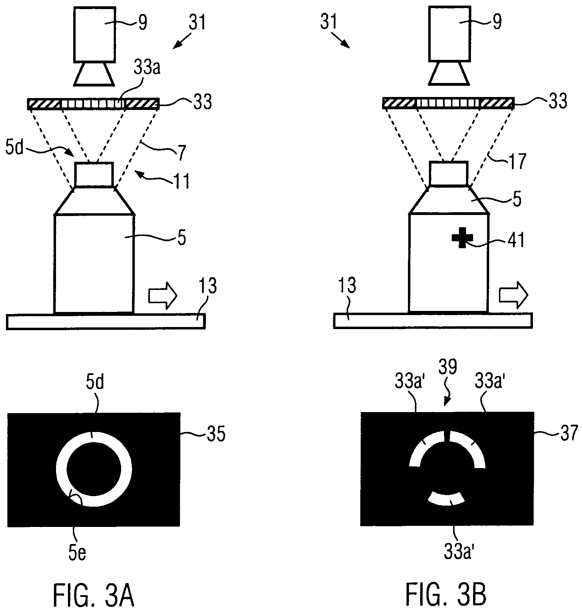

Fig. 3A zeigt eine dritte Ausführungsform 31 der erfindungsgemäßen Inspektionsvorrichtung, die im Gegensatz zu den vorgenannten Ausführungsformen nach dem Dunkelfeldprinzip arbeitet. Beispielhaft dargestellt ist eine Inspektionsvorrichtung 31 zur bildgebenden Überprüfung des Mündungsbereichs 5d eines Behälters 5. Die Beleuchtungsvorrichtung 33 ist ringförmig und schräg oberhalb des Mündungsbereichs 5d angeordnet, so dass der Mündungsbereich 5d mit Hilfe einer über dem Mündungsbereich 5d vorgesehenen Kamera 9 durch die ringförmige Beleuchtungseinrichtung 33 hindurch bildgebend überprüft werden kann.

Die Beleuchtungsvorrichtung 33 umfasst mehrere zirkumferenzielle Abschnitte 33a, die selektiv an- und ausgeschaltet werden können. Bei der Inspektion eines Behälters 5 werden vorzugsweise alle umfänglichen Teilsegmente 33a gleichzeitig angeschaltet, um eine umfänglich gleichmäßige Ausleuchtung des Mündungsbereichs 5d des Behälters 5 zu erzielen. Beschädigungen oder Verschmutzungen des Mündungsbereichs 5d verursachen im Inspektionsbild 35 der dritten Ausführungsform 31 einen Hell-Dunkel-Kontrast 5e, der aufgrund seiner Asymmetrie gegenüber dem umfänglich gleichmäßig ausgeleuchteten Mündungsbereich 5d identifiziert werden kann.

Aufgrund der Dunkelfeldbeleuchtung lässt sich eine Funktionskontrolle der Inspektionsvorrichtung der dritten Ausführungsform 31 ohne einen Behälter 5 im Inspektionsstrahlengang 11 nicht durchführen. Es ist jedoch möglich, anstelle eines speziell präparierten Testbehälters einen regulären zu überprüfenden Behälter 5 in der Inspektionsposition mit der Kamera 9 im Auflicht abzubilden. Um eine Beschädigung oder Verschmutzung des Mündungsbereichs 5d zu simulieren, können ausgewählte Segmente 33a der Inspektionsbeleuchtungseinrichtung 33 an- oder ausgeschaltet werden, um eine asymmetrische Beleuchtung des Mündungsbereichs 5d zu erzeugen. Dies ist in der Fig. 3B schematisch angedeutet. Im Beispiel werden nur drei Segmente 33a' zur Funktionskontrolle der Inspektionsvorrichtung 31 angeschaltet. Entsprechend werden in dem in der Fig. 2B angedeuteten Testkamerabild 37 drei umfängliche Segmente des Mündungsbereichs 5d hell und drei umfängliche Segmente dunkel abgebildet. Es wird somit auch bei dieser Ausführungsform 31 mindestens ein charakteristisches Merkmal in Form eines charakteristischen Hell-Dunkel-Übergangs in dem Testbild 37 erzeugt, beispielsweise in Form dunkler umfänglicher Segmente.

Es versteht sich von selbst, dass je nach Segmentierung der Beleuchtungseinrichtung 33 unterschiedliche charakteristische Hell-Dunkel-Übergänge mit der Inspektionsvorrichtung 31 möglich wären. Entscheidend ist, dass mindestens ein Hell-Dunkel-Übergang in einem definierten Bildbereich des Testbilds 37 erzeugt wird. Dadurch wird gewährleistet, dass ein charakteristisches Merkmal 39 ausgewertet werden kann, wobei die Sollanforderung bei einem Nichtvorhandensein des charakteristischen Merkmals im Testbild 37 verfehlt wird und von einer Funktionsstörung der Inspektionsvorrichtung 31 ausgegangen werden kann. Beispielsweise könnte der Inspektionsstrahlengang 11 mit einem Sprung im Schutzglas oder in der Kameraoptik, Dampf oder Nebel, Wassertropfen auf dem CCD, auf Filtereinrichtungen und/oder Schutzgläsern derart beeinträchtigt sein, dass der zur Erkennung einer Beschädigung 5e oder einer Verschmutzung des Mündungsbereichs 5d nötige Kontrast im Inspektionsbild 35 nicht gewährleistet werden kann. Somit simuliert ein im Testbild 37 fehlender charakteristischer Hell-Dunkel-Übergang eine falsch-negative Fehlererkennung bei der Inspektion eines verschmutzten oder beschädigten Mündungsbereichs 5d.

Den vorstehend beschriebenen Ausführungsformen gemeinsam ist, dass bei einem Nichtbestehen der Funktionskontrolle vorzugsweise ein Produktionsstopp erfolgt und/oder eine Reinigungsprozedur bei einer vorgeschalteten Produktionseinheit eingeleitet wird.

Das Vorgehen beim Bestehen der Funktionskontrolle unterscheidet sich jedoch dahingehend, dass bei der dritten Ausführungsform 31 der mit der Teststrahlung 17 bestrahlte Behälter 5 bei bestandener Funktionskontrolle als fehlerhaft erkannt wird und aus dem Produktionsstrom ausgeschieden wird. Demgegenüber erfolgt der Funktionstest bei der ersten und zweiten Ausführungsform ohne Behälter 5, so dass ein bestandener Funktionstest den Behälterstrom nicht beeinflusst. Insbesondere muss in diesem Fall kein Behälter 5 aus dem Produktionsstrom ausgeschieden werden.

Bei der dritten Ausführungsform 31 ist es daher wünschenswert, die Anzahl der bei der Funktionskontrolle auszuscheidenden Behälter 5 zu minimieren. Zu diesem Zweck können die Behälter 5 durch eine geeignete Markierung 41, wie beispielsweise einen Transponder, identifiziert werden. Beispielsweise könnte ein Behälter 5 nach einer erfolgten Funktionsprüfung mit der Markierung 41 als Testbehälter gekennzeichnet werden und für eine nachfolgende Funktionskontrolle erneut als Testbehälter verwendet werden. Ebenso wäre es möglich, für die beschriebenen Funktionstests vorrangig Behälter 5 zu verwenden, die bei anderen Qualitätsprüfungen als fehlerhaft erkannt worden sind. Dadurch lassen sich Behälter 5, die bereits als Fehlerbehälter identifiziert wurden, beispielsweise mit einer Seitenwandverschmutzung, als Testbehälter für eine folgende Boden- oder Dichtflächenkontrolle verwenden, um die Anzahl der insgesamt benötigten Behälter 5 für die Funktionskontrolle zu reduzieren. Obwohl sich ein gewisser Mindestausstoß von Behältern 5 für die Funktionskontrolle der dritten Ausführungsform 31 nicht vermeiden lässt, entfällt nichtsdestoweniger die Notwendigkeit, spezielle Testbehälter oder ähnliche Testkörper mit gleichbleibender Qualität vorhalten zu müssen. Auch hier lässt sich die Gefahr einer Manipulation reduzieren und die Flexibilität des Funktionstests bei einer nur geringen Beeinträchtigung des Produktstroms erhöhen. Würde ein dagegen beliebiger, ungekennzeichneter Behälter 5 für die Funktionskontrolle der dritten Ausführungsform 31 verwendet, so wäre der Grund der nachfolgenden Ausleitung des Behälters 5, nämlich die erfolgreiche Funktionskontrolle, nicht mehr nachvollziehbar. Der Behälter 5 wäre dann auf einem Ausscheideförderband von fehlerhaften Behältern nicht zu unterscheiden. Die Markierung 41 oder eine gleichwertige Kennzeichnung ist daher für den Betrieb der dritten Aüsführungsform besonders vorteilhaft,
Den beschriebenen Inspektionsvorrichtungen 1, 21, 31 und den jeweils zugeordneten Verfahren zur Funktionskontrolle gemeinsam ist, dass eine Teststrahlung 17, 17' mit einer charakteristischen Eigenschaft auf den Strahlungsdetektor 9 gerichtet wird, um dessen Funktionsweise und/oder die Durchlässigkeit zumindest eines Abschnitts des jeweiligen Inspektionsstrahlengangs 11 zu ermöglichen. Derartige charakteristische Eigenschaften sind insbesondere bei einer bildgebenden Detektion Hell-Dunkel-Verteilungen im auszuwertenden Kamerabild. Diese werden durch geeignete charakteristische Hell-Dunkel-Verteilungen im Strahlprofil der Teststrahlung 17, 17' verursacht. Eine derartige Hell-Dunkel-Verteilung ist durch eine Projektion eines Hell-Dunkel-Musters auf eine Streuscheibe, eine Blende oder eine den Inspektionsstrahlengang begrenzende Struktur möglich. Ebenso können derartige Hell-Dunkel-Verteilungen durch flächige Strahlungsquellen verursacht werden. Besonders geeignet sind zu diesem Zweck rasterförmige Beleuchtungseinrichtungen, wie Leuchtdiodenfelder, die beispielsweise mit mehreren hundert Bildpunkten verfügbar sind, oder TFT-Bildschirme oder OLED-Bildschirme. Bildschirme eignen sich insbesondere auch ohne Streuscheibe als Inspektionsbeleuchtungseinrichtung 3. Charakteristische Merkmale der Teststrahlung 17, 17' könnten auch durch zeitliche Variation der Beleuchtungsstärke erzeugt werden. Denkbar sind mechanische Shutter, Filter und/oder LCD-Schirme im Strahlengang 11.

Die Auswertung der Messsignale des Strahlungsdetektors 9 erfolgt vorzugsweise über eine zentrale Auswerteeinheit (nicht dargestellt). Diese könnte die jeweils gemessenen Signale mit gespeicherten charakteristischen Werten vergleichen. Dies könnten beispielsweise Intensitätswerte, zeitliche Intensitätsverläufe oder Bildschirmmuster in Form von Kontrastabstufungen sein. Mit derartigen Vergleichswerten lässt sich vor allem die Messaufgabe lösen, das Transmissionsverhalten des Inspektionsstrahlengangs 11 zu überprüfen. Dies wird insbesondere dadurch erreicht, dass ein vorgegebenes Signal, wie beispielsweise eine Hell-Dunkel-Abstufung der Teststrahlung 17, durch den Strahlengang 11 geschickt wird und überprüft wird, ob die Antwort des Detektors 9 auf die eintreffende Teststrahlung 17' einer zu erwartenden Antwort entspricht.

Mit den erfindungsgemäßen Inspektionsvorrichtungen 1, 21, 31 kann wie nachfolgend beschrieben gearbeitet werden:
Bei der ersten Ausführungsform 1 wird ein kontinuierlicher Strom zu inspizierender Behälter 5 mit Hilfe der Transportvorrichtung 13 durch den fest stehenden Inspektionsstrahlengang 11 zwischen der Inspektionsbeleuchtungseinrichtung 3 und dem Strahlungsdetektor 9 transportiert. Die Behälter 5 werden mit einem vorgegebenen Abstand zueinander durch die Inspektionsvorrichtung 1 gefahren. Beim Durchlaufen des Strahlengangs 11 werden die Behälter jeweils einer vorgegebenen Inspektionsprozedur folgend mit einer Inspektionsstrahlung 17' bestrahlt und bei Erkennen eines Fehlers, wie beispielsweise einer Verschmutzung oder Beschädigung des Behälters 5, aus dem laufenden Produktionsstrom ausgesondert. Jeweils zwischen zwei inspizierten Behältern 5 wird eine Teststrahlung 17' durch den Inspektionsstrahlengang 11 auf den Strahlungsdetektor 9 gerichtet. Wird anhand des von dem Strahlungsdetektor 9 gelieferten Testmesssignals eine vorgegebene charakteristische Eigenschaft der Teststrahlung 17' erkannt, wird eine ordnungsgemäße Funktion der Inspektionsvorrichtung 1 festgestellt und ein nachfolgend antransportierter Behälter 5 mit der Inspektionsstrahlung 7 untersucht. Wird eine in der Teststrahlung 17' vorgesehene charakteristische Eigenschaft dagegen aufgrund des von dem Strahlungsdetektor 9 ermittelten Messergebnisses nicht erkannt, so wird auf eine Fehlfunktion der Inspektionsvorrichtung 1 geschlossen und der Produktionsstrom vorzugsweise unterbrochen. Ebenso kann eine Reinigung stromaufwärts angeordneter Produktionsanlagen eingeleitet werden. Hierbei wäre es möglich, die Teststrahlung 17 jeweils nach einer vorgegebenen Anzahl von Behältern 5 auf den Strahlungsdetektor 9 zu richten, beispielsweise nach jedem zweiten oder fünften Behälter 5.

Bei der zweiten Ausführungsform 21 werden die zu inspizierenden Behälter 5 jeweils an eine umfänglich umlaufende Inspektionsstation 21a übergeben. Dabei sind mehrere Inspektionsstationen 21a an einer gemeinsamen Inspektionsvorrichtung 21 insbesondere vom Rundläufertyp vorgesehen. Die Übergabe der Behälter 5 an die jeweils zugeordnete Inspektionsstation 21a und die Abgabe der inspizierten Behälter 5 von der Inspektionsvorrichtung 21 erfolgt jeweils in Einlauf- und Auslaufbereichen 21c, 21d, wobei die Behälter 5 nach Bestücken der Inspektionsstationen 21a beim Umlaufen um ein umfängliches Segment der Inspektionsvorrichtung 21 inspiziert werden. Nach der Entnahme der inspizierten Behälter 5 werden die Inspektionsstationen 21a in einem Teilabschnitt 21e, in sie nicht mit einem Behälter 5 bestückt sind, mit der Teststrahlung 17, 17' beaufschlagt und die Funktionskontrolle der Inspektionsstationen 21a durchgeführt. Somit könnten alle Inspektionsstationen 21a kontinuierlich, und insbesondere zwischen zwei mit der jeweiligen Inspektionsstation 21a durchzuführenden Behälterinspektionen auf korrekte Funktion überprüft werden, ohne die Maschinenleistung der Inspektionsvorrichtung 21 drosseln zu müssen.

Bei der dritten Ausführungsform 31 werden vorzugsweise ausgewählte Behälter 5 mit der charakteristischen Teststrahlung 17 bestrahlt und der reflektierte Anteil 17' der Teststrahlung 17 mit der Kamera 9 ausgewertet. Die ausgewählten Behälter werden vorzugsweise als Testbehälter markiert. Bei erfolgreichem Funktionstest wird der ausgewählte Behälter 5 aus dem Produktstrom ausgeschleust und vorzugsweise für mindestens eine weitere Funktionskontrolle in der Produktionsanlage verwendet.

Die beschriebenen Ausführungsformen 1, 21, 31 können in beliebiger, technisch sinnvoller Weise kombiniert werden. Insbesondere kann die charakteristische Teststrahlung 17, 17' sowohl bei feststehenden als auch bei mit den Behältern 5 mitlaufenden Inspektionsvorrichtungen durch unterschiedliche technische Maßnahmen wie Projektion, selektive Ansteuerung von gruppierten Leuchtelementen, Strahlabschwächung und dergleichen erzeugt werden. Hierbei sind Bild gebende und nicht Bild gebende Detektion der charakteristischen Teststrahlung 17, 17' und die Auswertung unterschiedlicher Sollanforderungen, wie beispielsweise das Erkennen charakteristischer Hell-Dunkel-Übergänge oder die Messung einer erwarteten Gesamtbestrahlungsstärke der Teststrahlung 17, 17' beliebig kombinierbar.

Die beschriebenen Ausführungsformen 1, 21, 31 können außerdem an ein übergeordnetes Kontrollsystem 51 zum Anfordern und Verifizieren der Funktionskontrolle angeschlossen sein. Dies ist insbesondere in Kombination mit der dritten Ausführungsform 31 vorteilhaft, bei der in Folge einer erfolgreichen Funktionskontrolle derjenige Behälter 5 ausgeleitet werden soll, mit dessen Hilfe die charakteristische Teststrahlung 17' erzeugt wurde.

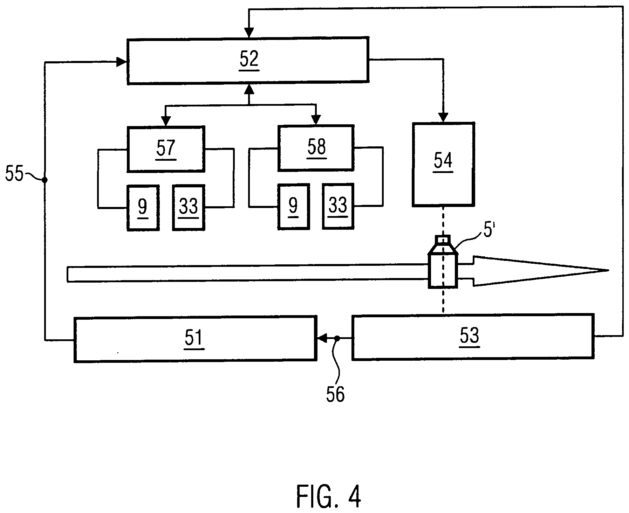

Wie die Fig. 4 zeigt, kann das Kontrollsystem 51 mit einer zentralen Steuereinheit 52 der Inspektionsvorrichtung 31 und mit einer Gegenkontrolleinrichtung 53 verbunden sein. Letztere ist so eingerichtet, dass mit ihr festgestellt werden kann, ob der mit der Funktionskontrolle assoziierte Behälter 5' auch tatsächlich von einer der Inspektionsvorrichtung 31 zugeordneten Ausleiteinheit 54 aus dem Produktstrom ausgeleitet wurde. Wie die Fig. 4 ferner verdeutlicht erhält die zentrale Steuereinheit 52 von dem Kontrollsystem 51 zumindest ein Anforderungssignal 55 zur Durchführung des Funktionstests und erhält zumindest ein Rückmeldungssignal 56 von der Gegenkontrolleinrichtung 53, die beispielsweise eine Lichtschranke oder einen vergleichbaren Detektor zum Identifizieren des ausgeleiteten Behälters 5' umfassen kann. Der Vollständigkeit halber sind in der Fig. 4 noch den Strahlungsdetektoren 9 und den Inspektionsbeleuchtungseinrichtungen 33 zugeordnete dezentrale Steuereinheiten 57, 58 angedeutet.

Neben einer umfassenden Verifizierung der Funktionskontrolle könnte das Kontrollsystem 51 auch lediglich dazu verwendet werden, beispielsweise Testanforderungen in Form von Auslösesignalen 55 für die Inspektionsbeleuchtungseinrichtung 33 oder die Strahlungsdetektoren 9 zu schicken oder auf geeignete Testalgorithmen umzuschalten. Es könnte auch unabhängig von den Strahlungsdetektoren 9 kontrolliert werden, ob der erwartete Behälter 5' auch tatsächlich ausgeleitet wurde. Eine derartige Kontrolle ließe sich kostengünstig realisieren.

Die beschriebenen Verfahren können auch als Selbsttestfunktion vor Produktionsbeginn durchgeführt werden, als Reinigungskontrolle nach der Produktion und/oder als Übergabetest, z. B. bei Schichtübergabe.

Die Funktionskontrolle wird vorzugsweise durch elektronische Datenverarbeitung und/oder durch Ausdruck protokolliert, ausgewertet und/oder gespeichert: beispielsweise zugeordnet nach laufender Nummer des Behälters und/oder der Charge, nach Zeitstempel, Identifikationscode und/oder einem Ereignis. Letzteres könnte beispielsweise eine manuelle Testanforderung sein, ein automatisch eingeleiteter Testzyklus, beispielsweise gesteuert durch die Zeit, die Behälteranzahl, ein Ereignis, z. B. den Abschluss einer Reinigungsprozedur der Anlage, oder ein gezieltes Vorgeben eines bestimmten Testbehälters. Mögliche Auswerteparameter sind beispielsweise Soll-/Ist-Werte von Kontrast-, Helligkeits- oder Ergebnissummen. Ebenso denkbar ist die Übergabe von Testergebnissen an Leitsysteme und/oder Mobilgeräte.

Die Kontrastwerte könnten zum Nachstellen der Lichtquellen und/oder zur Nachfokussierung und/oder zur Anpassung von Blendenöffnungen und Belichtungszeiten verwendet werden.

## Patentansprüche

1. Verfahren zur Funktionskontrolle einer Inspektionsvorrichtung (1, 21, 31) für einen Behälterstrom, wobei dessen Behälter (5) Flaschen sind,
wobei die Inspektionsvorrichtung mindestens eine Inspektionsstrahlungsquelle (3, 23, 33) zum Bestrahlen der zu inspizierenden Produkte (5) mit einer Inspektionsstrahlung (7) und mindestens einen Strahlungsdetektor (9) zum Messen der Inspektionsstrahlung (7') nach Wechselwirkung mit den Behältern sowie wenigstens einen Inspektionsstrahlengang (11) für die Inspektionsstrahlung (7, 7') umfasst,
wobei mit dem Strahlungsdetektor eine charakteristische Teststrahlung (17, 17') Bild gebend detektiert wird und ferner überprüft wird, ob die detektierte Teststrahlung eine für eine ordnungsgemäße Funktion der Inspektionsvorrichtung charakteristische Sollanforderung erfüllt, die darin besteht, dass ein charakteristisches Testmerkmal (29a, 29b, 39) in einem mit Hilfe der Teststrahlung (17, 17') detektierten Bild (27, 37) vorhanden ist, und wobei die charakteristische Teststrahlung (17, 17') ein Strahlprofil mit einem charakteristischen Hell-Dunkel-Muster aufweist und durch eine flächige Strahlungsquelle oder mittels einer Projektionsvorrichtung durch Projektion eines Hell-Dunkel-Musters auf eine im Inspektionsstrahlengang (11) beleuchtungsseitig vorgesehene Streuscheibe, Blende oder den Inspektionsstrahlengang (11) begrenzende Struktur erzeugt wird und ferner durch den Inspektionsstrahlengang (11) geleitet wird.

2. Verfahren nach Anspruch 1, wobei sich die charakteristische Teststrahlung (17, 17') bezüglich ihres Strahlprofils und/oder ihrer Bestrahlungsstärke von der Inspektionsstrahlung (7, 7') unterscheidet.

3. Verfahren nach Anspruch 1 oder 2, wobei die charakteristische Teststrahlung (17, 17') schwächer ist als die Inspektionsstrahlung (7, 7').

4. Verfahren nach Anspruch 1, wobei der Strahlungsdetektor (9) die charakteristische Teststrahlung (17, 17') bei laufendem Behälterstrom detektiert, wenn sich im Inspektionsstrahlengang (11) kein Behälter (5) befindet.

5. Verfahren nach Anspruch 1, wobei die charakteristische Teststrahlung (17, 17') auf einen im Inspektionsstrahlengang (11) befindlichen Behälter (5) gerichtet wird.

6. Verfahren nach Anspruch 5, wobei der mit der charakteristischen Teststrahlung (17, 17') bestrahlte Behälter (5) als Testobjekt gekennzeichnet wird.

7. Verfahren nach Anspruch 6, wobei der als Testobjekt gekennzeichnete Behälter (5) für mindestens eine weitere Inspektion des Behälterstroms als Testobjekt verwendet wird.

8. Verfahren nach Anspruch 1, wobei das Testmerkmal (29a, 29b, 39) ein Bildkontrast ist, der charakteristisch ist für eine Beschädigung oder Verschmutzung des Behälters (5) oder eine Fehlfunktion der Inspektionsvorrichtung (1, 21, 31).

9. Verfahren nach Anspruch 1, wobei die Lage der Hell-Dunkel-Übergänge im Strahlprofil der charakteristischen Teststrahlung (17, 17') verändert wird und mindestens ein Testbild (27) vor der Veränderung und mindestens ein Testbild (27') nach der Veränderung aufgenommen wird, und wobei die Testbilder miteinander verglichen werden.

10. Verfahren nach wenigstens einem der vorigen Ansprüche, wobei bei einem Verfehlen der charakteristischen Sollanforderung ein Produktionsstopp und/oder ein Reinigungsprozess ausgelöst wird.

11. Verfahren nach einem der Ansprüche 5, 6 oder 7, bei dem ferner verifiziert wird, ob der Behälter (5') in Folge der Funktionskontrolle aus dem Behälterstrom ausgeleitet wurde.

12. Vorrichtung (1, 21, 31) zur Inspektion eines Behälterstroms, wobei dessen Behälter (5) Flaschen sind, mit:
- einer Strahlungsquelle (3, 23, 33) zum Bestrahlen der zu inspizierenden Behälter (5) mit einer Inspektionsstrahlung (7);
- mindestens einem Strahlungsdetektor (9) zum Messen der Inspektionsstrahlung (7') nach Wechselwirkung mit den Behältern;
- wenigstens einem Inspektionsstrahlengang (11) für die Inspektionsstrahlung (7, 7'); und
- einer Funktionstesteinrichtung zum Bereitstellen einer mit dem Strahlungsdetektor zu detektierenden charakteristischen Teststrahlung (17, 17') und zur Überprüfung, ob die detektierte Teststrahlung eine für eine ordnungsgemäße Funktion der Inspektionsvorrichtung charakteristische Sollanforderung erfüllt,
wobei der Strahlungsdetektor (9) eine Kamera ist und die Funktionstesteinrichtung eine Bildauswerteeinheit umfasst, die geeignet ist, das Vorhandensein eines Testmerkmals (29a, 29b, 39) in einem mit der Teststrahlung (17, 17') belichteten Ausgabebild (27, 27', 37) der Kamera zu überprüfen, und wobei die Funktionstesteinrichtung eine flächige Strahlungsquelle oder eine Projektionsvorrichtung zum Projizieren eines Hell-Dunkel-Musters auf eine im Inspektionsstrahlengang (11) der Vorrichtung beleuchtungsseitig vorgesehene Streuscheibe (3a), Blende oder den Inspektionsstrahlengang begrenzende Struktur umfasst, um die charakteristische Teststrahlung (17, 17') mit einem Strahlprofil, das ein charakteristisches Hell-Dunkel-Muster aufweist, zu erzeugen und durch den Inspektionsstrahlengang (11) zu leiten.

13. Vorrichtung nach Anspruch 12, wobei die Funktionstesteinrichtung eine verstellbare Abschwächeinrichtung zum Abschwächen oder Blockieren der Inspektionsstrahlung (17, 17') umfasst, um einen Anteil der Inspektionsstrahlung (7) als Teststrahlung (17, 17') bereit zu stellen.

14. Vorrichtung nach Anspruch 12 oder 13, wobei die Strahlungsquelle (23, 33) derart ausgebildet ist, dass mit ihr sowohl die Inspektionsstrahlung (7) als auch die Teststrahlung (17, 17') erzeugt werden kann.

15. Vorrichtung nach einem der Ansprüche 12 bis 14, wobei die Funktionstesteinrichtung ein segmentiertes Beleuchtungsfeld mit selektiv ansteuerbaren Leuchtsegmenten (23b, 33a) zum Erzeugen eines Hell-Dunkel-Beleuchtungsmusters umfasst, wobei das Beleuchtungsfeld insbesondere ein Bestandteil der Inspektionsstrahlungsquelle (3) ist.

16. Vorrichtung nach einem der Ansprüche 12 bis 15, wobei die Vorrichtung eingerichtet ist, um vor jeder Inspektion eines Behälters (5) eine Funktionskontrolle mit Hilfe des für die anstehende Inspektion vorgesehenen Strahlungsdetektors (9) durchzuführen.

17. Vorrichtung nach einem der Ansprüche 12 bis 16, wobei die Vorrichtung vom Rundläufertyp ist und mehrere umlaufende Inspektionsstationen (21a) zur Inspektion je eines Behälters (5) mit einem jeweils zugeordneten Strahlungsdetektor (9) umfasst.

18. Vorrichtung nach einem der Ansprüche 12 bis 17, ferner mit einer Ausleitvorrichtung (54) zum Ausleiten fehlerhafter Behälter und mit einer Kontrollvorrichtung (51, 53) zum Überprüfen, ob ein Behälter (5') in Folge der Funktionskontrolle von der Ausleitvorrichtung ausgeleitet wurde.

## Claims

1. Method for the functional control of an inspection device (1, 21, 31) for a container flow, the containers (5) thereof being bottles,
wherein the inspection device comprises at least one inspection radiation source (3, 23, 33) for irradiating the products to be inspected (5) with an inspection radiation (7), at least one radiation detector (9) for measuring the inspection radiation (7') after interaction with the containers, and at least one inspection beam path (11) for the inspection radiation (7, 7'),
wherein a characteristic test radiation (17, 17') is detected with the radiation detector by imaging, and it is furthermore checked whether the detected test radiation fulfills a target requirement characteristic of proper functioning of the inspection device, the target requirement being the presence of a characteristic test feature (29a, 29b, 39) in an image (27, 37) detected with the aid of the test radiation (17, 17'),
and wherein the characteristic test radiation (17, 17') has a beam profile comprising a characteristic bright-dark-pattern and is caused by means of a plane radiation source or by means of a projection device projecting a bright-dark-pattern onto a diffusion screen or light shade, provided in the inspection beam path (11) on the side of illumination, or a structure limiting the inspection beam path (11), and is further passed through the inspection beam path (11).

2. Method according to claim 1, wherein the characteristic test radiation (17, 17') differs from the inspection radiation (7, 7') with respect to its beam profile and/or its intensity of irradiation.

3. Method according to claim 1 or 2, wherein the characteristic test radiation (17, 17') is weaker than the inspection radiation (7, 7').

4. Method according to claim 1, wherein the radiation detector (9) detects the characteristic test radiation (17, 17') while the container flow is running when no container (5) is located in the inspection beam path (11).

5. Method according to claim 1, wherein the characteristic test radiation (17, 17') is directed onto a container (5) located in the inspection beam path (11).

6. Method according to claim 5, wherein the container (5) irradiated with the characteristic test radiation (17, 17') is marked as test object.

7. Method according to claim 6, wherein the container (5) marked as test object is used as test object for at least one further inspection of the container flow.

8. Method according to claim 1, wherein the test feature (29a, 29b, 39) is an image contrast which is characteristic of a damage or soiling of the container (5) or a malfunction of the inspection device (1, 21, 31).

9. Method according to claim 1, wherein the position of the bright/dark transitions in the beam profile of the characteristic test radiation (17, 17') is changed, and at least one test image (27) is taken before the change, and at least one test image (27') is taken after the change, and wherein the test images are compared to each other.

10. Method according to at least one of the preceding claims, wherein, when the characteristic target requirement is missed, a production stop and/or a cleaning process is triggered.

11. Method according to one of claims 5, 6 or 7, wherein it is furthermore verified whether the container (5') was discharged from the container flow as a consequence of the functional control.

12. Device (1, 21, 31) for the inspection of a container flow, the containers (5) thereof being bottles, the device having:
- a radiation source (3, 23, 33) for irradiating the containers (5) to be inspected with an inspection radiation (7), and
- at least one radiation detector (9) for measuring the inspection radiation (7') after interaction with the containers,
- at least one inspection beam path (11) for the inspection radiation (7, 7'); and
- a function test device for providing a characteristic test radiation (17, 17') to be detected with the radiation detector, and for checking whether the detected test radiation fulfills a target requirement characteristic of a proper function of the inspection device,
wherein the radiation detector (9) is a camera and the function test device comprises an image evaluation unit which is suited for checking the presence of a test feature (29a, 29b, 39) in an output image (27, 27', 37) of the camera exposed to the test radiation (17, 17'), and wherein the function test device comprises a plane radiation source or a projection device for projecting a bright-dark-pattern onto a diffusion screen or light shade, provided in the inspection beam path (11) of the device on the side of illumination, or onto a structure limiting the inspection beam path, for producing the characteristic test radiation (17, 17') with a beam profile comprising a chracteristic bright-dark-pattern, and for passing the characteristic test radiation through the inspection beam path (11).

13. Device according to one of claim 12, wherein the function test device comprises an adjustable attenuation device for attenuating or blocking the inspection radiation (17, 17') to provide a portion of the inspection radiation (7) as test radiation (17, 17').

14. Device according to claim 12 or 13, wherein the radiation source (23, 33) is designed such that it can generate both the inspection radiation (7) and the test radiation (17, 17').

15. Device according to one of claims 12 to 14, wherein the function test device comprises a segmented illumination field with selectively activated light segments (23b, 33a) for generating a bright/dark illumination pattern, wherein the illumination field is in particular a component of the inspection radiation source (3).

16. Device according to one of claims 12 to 15, wherein the device is configured to perform, before each inspection of a container (5), a functional control with the aid of the radiation detector (9) provided for the pending inspection.

17. Device according to one of claims 12 to 16, wherein the device is a rotary-type device and comprises several circulating inspection stations (21a) for the inspection of one container (5) each with a respectively associated radiation detector (9).

18. Device according to one of claims 12 to 17, further having a discharge device (54) for discharging defective containers, and with a control device (51, 53) for checking whether a container (5') has been discharged by the discharge device as a consequence of functional control.

## Revendications

1. Procédé pour le contrôle de fonction d'un dispositif d'inspection (1, 21, 31) pour un flux de récipients, dont les récipients (5) sont des bouteilles, le dispositif d'inspection comprenant au moins une source de rayonnement d'inspection (3, 23, 33) pour irradier les produits (5) à inspecter avec un rayonnement d'inspection (7) et au moins un détecteur de rayonnement (9) pour mesurer le rayonnement d'inspection (7') après interaction avec les récipients ainsi qu'au moins un trajet de faisceau d'inspection (11) pour le rayonnement d'inspection (7), 7'), un rayonnement de contrôle caractéristique (17, 17') étant détecté au moyen du détecteur de rayonnement de manière à former une image et il est en outre vérifié si le rayonnement de contrôle détecté satisfait à une exigence cible caractéristique d'un fonctionnement correct de l'appareil de contrôle, qui consiste en ce qu'une caractéristique de contrôle caractéristique (29a, 29b, 39) est présente dans une image (27, 37) détectée à l'aide du rayonnement de contrôle (17, 17'), **caractérisé en ce que** la caractéristique de contrôle (29a, 29b, 39) est une caractéristique de contrôle caractéristique (29a, 29b, 39) qui est présente dans une image (27, 37) détectée à l'aide du rayonnement de contrôle (17, 17'),
et dans lequel le rayonnement de contrôle caractéristique (17, 17') présente un profil de faisceau avec un motif clair-obscur caractéristique et est généré par une source de rayonnement plane ou au moyen d'un dispositif de projection par projection d'un motif clair-obscur sur une plaque, un diaphragme ou une structure diffusante délimitant le trajet du faisceau de contrôle (11) prévu dans le trajet du faisceau de contrôle (11) du côté de l'éclairage et est ensuite guidé à travers le trajet du faisceau de contrôle (11).

2. Procédé selon la revendication 1, dans lequel le rayonnement d'essai caractéristique (17, 17') diffère du rayonnement de contrôle (7, 7') en ce qui concerne son profil de faisceau et/ou son irradiation.

3. Procédé selon les revendications 1 ou 2, dans lequel le rayonnement caractéristique de l'essai (17, 17') est plus faible que le rayonnement de contrôle (7, 7').

4. Procédé selon la revendication 1, dans lequel le détecteur de rayonnement (9) détecte le rayonnement d'essai caractéristique (17, 17') pendant que le flux de récipients est en marche, lorsqu'il n'y a pas de récipient (5) dans le trajet du faisceau d'inspection (11).

5. Procédé selon la revendication 1, dans lequel le rayonnement d'essai caractéristique (17,17') est dirigé vers un récipient (5) situé dans le trajet du faisceau d'inspection (11).

6. Procédé selon la revendication 5, dans lequel le récipient (5) irradié avec le rayonnement d'essai caractéristique (17, 17') est caractérisé comme l'objet d'essai.

7. Procédé selon la revendication 6, dans lequel le récipient (5) désigné comme objet d'essai est utilisé comme objet d'essai pour au moins une inspection supplémentaire du flux de récipients.

8. Procédé selon la revendication 1, dans lequel la caractéristique d'essai (29a, 29b, 39) est un contraste d'image caractéristique d'un dommage ou d'une contamination du récipient (5) ou d'un dysfonctionnement du dispositif de contrôle (1, 21, 31).

9. Procédé selon la revendication 1, dans lequel la position des transitions clair-obscur dans le profil de faisceau du rayonnement de test caractéristique (17, 17') est modifiée et au moins une image de test (27) est prise avant la modification et au moins une image de test (27') est prise après la modification, et dans lequel les images de test sont comparées entre elles.

10. Procédé selon au moins une des revendications précédentes, dans lequel un arrêt de la production et/ou un processus de nettoyage est déclenché si l'exigence cible caractéristique n'est pas satisfaite.

11. Procédé selon l'une des revendications 5, 6 ou 7, comprenant en outre la vérification du fait que le récipient (5') a été déchargé du flux de récipients à la suite du contrôle de fonction.

12. Dispositif (1, 21, 31) pour l'inspection d'un flux de récipients, dont les récipients (5) sont des bouteilles, comprenant:
- une source de rayonnement (3, 23, 33) pour irradier les récipients (5) à inspecter avec un rayonnement d'inspection (7);
- au moins un détecteur de rayonnement (9) pour mesurer le rayonnement de contrôle (7') après interaction avec les récipients;
- au moins un trajet de faisceau d'inspection (11) pour le rayonnement d'inspection (7, 7')
- un dispositif d'essai fonctionnel permettant de fournir un rayonnement d'essai caractéristique (17, 17') à détecter par le détecteur de rayonnement et de vérifier si le rayonnement d'essai détecté répond à une exigence cible caractéristique d'un bon fonctionnement du dispositif de contrôle,
dans lequel le détecteur de rayonnement (9) est une caméra et le dispositif de test fonctionnel comprend une unité d'évaluation d'image conçue pour vérifier la présence d'une caractéristique de test (29a, 29b, 39) dans une image de sortie (27, 27', 37) de la caméra exposée au rayonnement de test (17, 17'),
et dans lequel le dispositif de test fonctionnel comprend une source de rayonnement plane ou un dispositif de projection pour projeter un motif clair-obscur sur une plaque de diffusion (3a), un diaphragme ou une structure délimitant le trajet du faisceau de contrôle prévu du côté de l'éclairage dans le trajet du faisceau de contrôle (11) du dispositif afin de générer le rayonnement de test caractéristique (17, 17') avec un profil de faisceau ayant un motif clair-obscur caractéristique et de le guider à travers le trajet du faisceau de contrôle (11).

13. Dispositif selon la revendication 12, dans lequel le dispositif d'essai fonctionnel comprend des moyens d'atténuation réglables pour atténuer ou bloquer le rayonnement d'inspection (17, 17') afin de fournir une partie du rayonnement d'inspection (7) en tant que rayonnement d'essai (17, 17').

14. Dispositif selon les revendications 12 ou 13, dans lequel la source de rayonnement (23, 33) est configurée pour générer à la fois le rayonnement d'inspection (7) et le rayonnement d'essai (17, 17').

15. Dispositif selon l'une quelconque des revendications 12 à 14, dans lequel le dispositif de contrôle du fonctionnement comprend un champ d'éclairage segmenté avec des segments lumineux (23b, 33a) pouvant être contrôlés de manière sélective pour générer un motif d'éclairage clair-obscur, le champ d'éclairage étant en particulier un composant de la source de rayonnement de contrôle (3).

16. Dispositif selon l'une quelconque des revendications 12 à 15, dans lequel le dispositif est agencé pour effectuer un contrôle de fonction avant chaque inspection d'un récipient (5) au moyen du détecteur de rayonnement (9) prévu pour l'inspection à venir.

17. Dispositif selon l'une quelconque des revendications 12 à 16, dans lequel le dispositif est du type rotatif et comprend une pluralité de stations d'inspection rotatives (21a), chacune pour inspecter un récipient (5) avec un détecteur de rayonnement associé respectif (9).

18. Dispositif selon l'une quelconque des revendications 12 à 17, comprenant en outre un moyen de rejet (54) pour rejeter les récipients défectueux et un moyen de contrôle (51, 53) pour vérifier si un récipient (5') a été rejeté par le moyen de rejet à la suite du contrôle de fonctionnement.
